# EUROPEAN PATENT APPLICATION

(11) **EP 4 428 683 A1**
(43) Date of publication of application: **11.09.2024**
(21) Application number: 22889154.5
(22) Date of filing: 25.10.2022
(51) Int. Cl.: G06F 9/455

(54) **HARDWARE PERFORMANCE ACQUISITION METHOD, AND DEVICE, SYSTEM AND STORAGE MEDIUM**

(30) Priority: 03.11.2021 CN 202111295673
(71) Applicant: Hangzhou Alicloud Feitian Information Technology Co., Ltd., Hangzhou, Zhejiang 310023 (CN)
(72) Inventor: WU, Binbin, Hangzhou, Zhejiang 310024 (CN); REN, Jinkui, Hangzhou, Zhejiang 310024 (CN); MIAO, Renjiang, Hangzhou, Zhejiang 310024 (CN); DI, Bang, Shanghai 200000 (CN)
(74) Representative: Viering, Jentschura & Partner mbB Patent- und Rechtsanwälte
(86) International application number: PCT/CN2022/127439
(87) International publication number: WO 2023/078129

(57) **Abstract**

Provided in the embodiments of the present application are a hardware performance acquisition method, and a device, a system and a storage medium. A virtual machine is additionally provided with a performance service component, which can be used as an interaction interface, and a physical machine where the virtual machine is located is additionally provided with a performance proxy component. The virtual machine can acquire a hardware performance data request by means of the performance service component, and provide the hardware performance data request to the performance proxy component by means of a performance server; the performance proxy component can acquire, according to the hardware performance data request, an incidence number that reflects the hardware performance of the physical machine; and the performance server can process associated data according to a set data processing mode, so as to obtain corresponding hardware performance parameters. Further, the performance server can provide the hardware performance parameters of the physical machine to a client corresponding to the virtual machine, thereby revealing the underlying performance of hardware of the physical machine. By means of the embodiments of the present application, the underlying performance of hardware of a physical machine is revealed to a user of the virtual machine on the basis of the form of a service, such that reference can be provided for subsequent performance adjustment and optimization of the user.

## Description

The present application claims priority to Chinese Patent Application No. 202111295673.0, filed with the Chinese Patent Office on November 3, 2021, and entitled "Hardware Performance Acquisition Method, Device, System and Storage Medium," which is incorporated herein by reference in its entirety.

### TECHNICAL FIELD

The present application relates to a field of computer technology, and in particular, to a hardware performance acquisition method, a device, a system and a storage medium.

### BACKGROUND

The server virtualization technology is a key technology based on infrastructure layers in cloud computing. By virtualizing a physical server, the technology achieves the deployment of multiple Virtual Machines (VMs) on a single physical machine. Physical resources are abstracted into a resource pool composed of various resources such as storage, calculation and network through the virtualization technology, and are provided to a user who applies for resources on demand.

For the sake of information security, the underlying performance of hardware of a server is not exposed to VMs, so that users of the VMs cannot perform performance tuning on an application according to the underlying hardware performance of the physical machine.

### SUMMARY

Embodiments of the present application provide a hardware performance acquisition method, a device, a system and a storage medium, to reveal the underlying performance of hardware of a physical machine to a user, to provide a reference for subsequent performance tuning on an application.

In a first aspect, embodiments of the present application provide a computing system, including: a physical machine deployed with a virtual machine and a performance proxy component, and a performance server; the virtual machine being deployed with a performance service component; wherein the virtual machine acquires a hardware performance data request through the performance service component, and provides the hardware performance data request to the performance proxy component via the performance server; the performance proxy component is configured to acquire associated data reflecting a hardware performance of the physical machine according to the hardware performance data request, and provide the associated data to the performance server; the performance server is configured to process the associated data in a preset data processing manner to determine a hardware performance parameter of the physical machine, and provide the hardware performance parameter to a client corresponding to the virtual machine.

In a second aspect, embodiments of the present application provide a hardware performance acquisition method, including: acquiring a hardware performance data request provided by a virtual machine through a performance service component; providing the hardware performance data request to a performance proxy component in a physical machine deployed with the virtual machine, so that the performance proxy component acquires associated data reflecting a hardware performance of the physical machine based on the hardware performance data request; receiving the associated data returned by the performance proxy component; processing the associated data in a preset data processing manner to determine a hardware performance parameter of the physical machine; providing the hardware performance parameter to a client corresponding to the virtual machine.

In a third aspect, embodiments of the present application provide another hardware performance acquisition method, including: acquiring a hardware performance data request through a performance service component in a virtual machine; acquiring associated data reflecting a hardware performance of a physical machine deployed with the virtual machine according to the hardware performance data request; providing the associated data to a performance server, so that the performance server processes the associated data in a preset data processing manner to obtain a hardware performance parameter of the physical machine, and providing the hardware performance parameter to a client corresponding to the virtual machine.

In a fourth aspect, embodiments of the present application provide a computing device, including: a memory, a processor, and a communication component, wherein the memory is used for storing a computer program; the processor is coupled to the memory and the communication component for executing the computer program to perform the steps of the hardware performance acquisition method in the above aspects.

In a fifth aspect, embodiments of the present application further provide a computer-readable storage medium storing computer instructions which, when executed by one or more processors, cause the one or more processors to perform the steps of the hardware performance acquisition method in the above aspects.

The above depictions are only a summary of technical solutions of the present application. In order to have a clearer understanding of the technical means of the present application, the technical solutions may be implemented according to the content of the description. Furthermore, specific implementations of the present application will be exemplified below to make the above and other objects, features and advantages of the present application more apparent.

### BRIEF DESCRIPTION OF THE DRAWINGS

In the accompanying drawings, like reference numerals throughout a plurality of figures denote the same or similar parts or elements unless otherwise specified. These drawings are not necessarily drawn to scale. It should be appreciated that these appreciated depict merely some implementations according to present application, and should not be construed as limiting the scope of the present application.
FIG. 1 schematically illustrates a structure of a computing system according to an embodiment of the present application;
FIG. 2 schematically illustrates a structure of a computing system according to another embodiment of the present application;
FIG. 3 schematically illustrates a flow chart of a hardware performance acquisition method according to an embodiment of the present application;
FIG. 4 schematically illustrates a flow chart of a hardware performance acquisition method according to another embodiment of the present application; and
FIG. 5A-FIG. 5B schematically illustrate a structural diagram of a computing device according to embodiments of the present application.

### DETAILED DESCRIPTION

Some exemplary embodiments are simply described hereunder. As appreciated by those skilled in the art, the described embodiments may be modified in various different manners without departing from the concept or scope of the present application. Hence, figures and depictions are considered as substantively exemplary, rather than restrictive.

Relevant techniques of embodiments of the present application will be described below to facilitate understanding technical solution of embodiments of the present application. The following relevant techniques, as optional solutions, may be arbitrarily combined with the technical solutions of embodiments of the present application, and all fall within the scope of protection of the embodiments of the present application.

For the sake of information security, the underlying performance of hardware of a server is not exposed to VMs, so that users of the VMs cannot perform performance tuning on an application according to the underlying hardware performance of the physical machine. In order to solve the above technical problem, in some embodiments of the present application, a virtual machine is additionally provided with a performance service component which may serve as an interaction interface, and a performance proxy component is additionally provided in a physical machine where the virtual machine is located. The virtual machine may acquire a hardware performance data request via a performance service component, and provide the hardware performance data request to the performance proxy component via a performance server. The performance proxy component may acquire associated data reflecting the hardware performance of a physical machine according to the hardware performance data request. The performance server may process the associated data reflecting the hardware performance of the physical machine in a preset data processing manner to obtain a corresponding hardware performance parameter. In an implementation, the performance server may provide the hardware performance parameter of the physical machine to a client corresponding to the virtual machine, so as to achieve the reveal of the underlying performance of the hardware of a physical machine. Embodiments of the present application realize, in the form of service, reveal of the underlying performance of hardware of a physical machine to a user of the virtual machine, which may provide a reference for subsequent performance tuning for the user.

Technical solutions provided by embodiments of the present application are described in detail below with reference to the drawings.

It should be noted that like reference numerals refer to like objects in the following drawings and embodiments, and thus, once an object is defined in one figure or embodiment, it does not need to be further discussed in subsequent figures and embodiments.

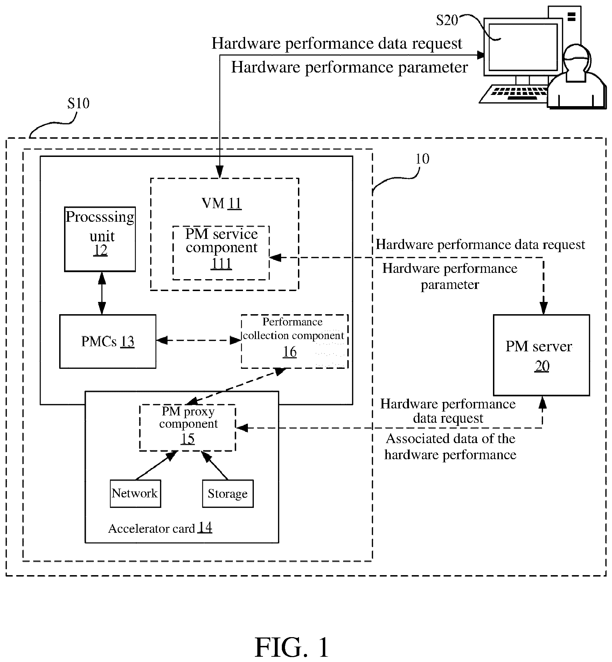

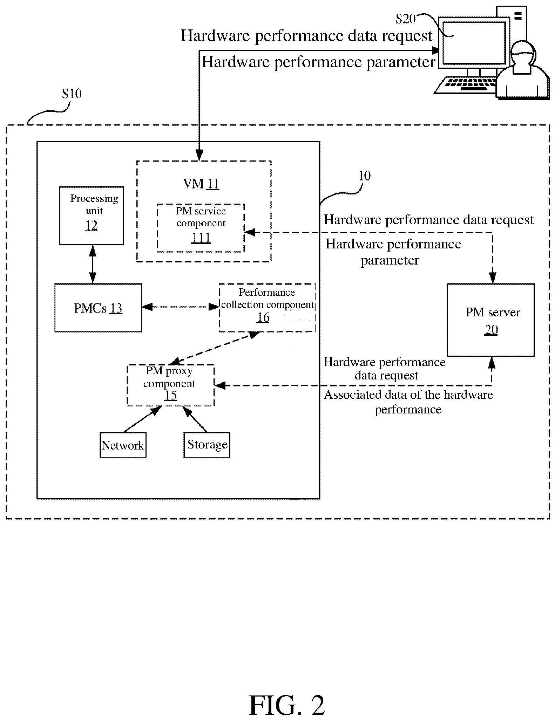

FIG. 1 and FIG. 2 are schematic diagrams of a computing system according to embodiments of the present application. As shown in FIG. 1 and FIG. 2, the computing system S10 includes: a physical machine 10 and a performance server 20. The performance server 20, also referred to as a Performance Monitoring Server (PMS), is a PM server 20 in FIG. 1 and FIG. 2.

In the present embodiment, the physical machine 10 may be a single server device, or an array of cloud servers, or the like. In addition, the physical machine 10 may also refer to other computing devices having a corresponding service capability, for example, a terminal device (running a service program) such as a computer.

The performance server 20 refers to a software function module, apparatus or device that provides a performance service function. In some embodiments, the performance server 20 may be a software function module, which may be deployed in the physical machine 10, or may be deployed in other physical machines. The physical machine in which the performance server 20 located may be a single-server device, an array of cloud servers, or the like.

In case where the physical machine corresponding to the performance server 20 is a physical machine different from the physical machine 10, a wireless or wired connection may be made between the physical machine 10 and the performance server 20. In an implementation, the physical machine 10 and the performance server 20 may communicatively connected through a mobile network. Correspondingly, a network standard of the mobile network may be any one of 2G (GSM), 2.5G (GPRS), 3G (WCDMA, TD-SCDMA, CDMA2000, UTMS), 4G (LTE), 4G+ (LTE+), 5G, WiMax, etc. In an implementation, the physical machine 10 and the performance server 20 may also be communicatively connected via Bluetooth, WiFi, infrared, etc. Certainly, the physical machine 10 and performance server 20 may be coupled via a virtual network, e.g., communicatively connected via an overlay network. The underlay network may be implemented as a VPC network, a virtual private network (VPN), or a Virtual Local Area Network (VLAN), etc.

In some embodiments, the performance server 20 is deployed in the physical machine 10, and various components in the physical machine 10 may be communicatively connected to the performance server 20 via a physical network, e.g., communicatively connected to the performance server 20 via the underlay network.

In order to reduce the occupation of resources of the physical machine 10, in an implementation, the performance server 20 is deployed to other physical machines other than the physical machine 10, so that the performance server 20 may not occupy the resources of the physical machine 10, thereby helping to improve the service performance of the physical machine 10 for users of the virtual machine 11. On the other hand, the performance server 20 may also provide hardware performance monitoring service to virtual machines in hosts other than the physical machine 10.

In an embodiment of the present application, the physical machine 10 may be a cloud server (Elastic Compute Service (ECS)), and provide an IaaS (Infrastructure as a Service)-type service to users. In the embodiment, server virtualization technology may be employed to virtualize the physical machine 10 to achieve deployment of one or more virtual machines 11 on a single physical machine. FIG. 1 and FIG. 2 illustrate with only one virtual machine 11, which is not intended to be limiting. Physical resources are abstracted into a resource pool composed of various resources such as storage, calculation and network through the virtualization technology, and are provided to a user who applies for resources on demand. In the embodiment, the virtual machine 11 may be a virtual machine that a certain user applies for or leases. The user may deploy a corresponding application or service on the virtual machine 11 through his/her client S20.

The physical machine 10 further includes a processing unit 12. The processing unit 12 refers to a hardware module having a processing function in the physical machine 10. The processing unit 12 may be a serial processing unit or a parallel processing unit. For example, the processing unit 12 may be a general-purpose processor or the like. The general-purpose processor is typically a computing unit that performs conventional serial processing operations, e.g., a central processing unit CPU. The parallel processing unit refers to a processing device that may perform computing processing in parallel. For example, the processing unit may be a GPU, FPGA, etc.

In the embodiment, the physical machine 10 is provided with a Performance Monitoring Counter (PMC) 13 for monitoring the performance of the processing unit 12. The number of performance monitoring counter may be one or more. In an example, the number of PMCs is multiple. The PMC may count hardware events of the processing unit 12 to monitor different performance indices of the processing unit 12. For example, the PMC may be a counter that monitors the performance of the CPU, and the like.

The PMC 13 may be a register. A value in the register plus 1 when an event occurs. For example, it may be arranged to count the number of memory cache miss events that occur during operation, such that the PMC register plus 1 when a memory cache miss event occurs during operation, so that it is known how many memory cache miss events occur during a period of time.

Since the PMC supported by the CPU hardware is global to a physical core or logical core, and PMC resources are shared upon running in a vCPU context and a host context running on the physical core/logical core, the implementation of virtualization generally does not expose the capability of the PMC to a VM. As such, there is no way for a user of the VM to utilize the underlying hardware information to optimize the performance of the application.

In some embodiments, to achieve hardware acceleration, an accelerator card 14 may be provided on the physical machine 10 as shown in FIG. 1. Accordingly, the virtualization of storage and network may be offloaded onto the accelerator card 14. The accelerator card 14 refers to a hardware device that may provide resources for the physical machine 10. The resources provided by the accelerator card 14 include network, storage and computing resources, etc. The computing resources in the accelerator card 14 may include: a parallel processing unit and/or a serial processing unit, etc. Since VM instances of different specifications have different specification indices for the capabilities of storage and network, and meanwhile there will be restrictions on the accelerator card 14. However, currently no corresponding information is provided to the user when there is a functional bottleneck in the storage or network.

Both the performance information about the processing unit 12 and the storage/network-related performance information need to be manually collected or acknowledged by an internal technician. Firstly, this causes a rise in manpower cost, and secondly, it is impossible for a user of the virtual machine 11 to autonomously perform performance analysis and optimization on an application deployed in the virtual machine 11 according to the information, thereby reducing the experience of the overall service.

In an embodiment of the present application, in order to provide a use of the virtual machine 11 with the underlying performance information of hardware of the physical machine, a performance service component 111, also referred to as a performance monitoring service (PM Service) component, namely, the PM service component in FIG. 1 and FIG. 2, may be additionally provided in the virtual machine 11. The performance service component 111 may provide an interaction interface which may receive a request sent by a client S20 corresponding to the virtual machine 11, and the performance service component 111 may interact with the client S20 based on the client S20's request.

In order to obtain the hardware performance information of the physical machine 10, a performance proxy component 15, also be referred to as a performance monitoring proxy (PM Proxy) component, i.e., the PM Proxy component in FIG. 1 and FIG. 2, may also be additionally provided in the physical machine 10. The performance proxy component 15 refers to a software functional module having a data transmitting and/or processing function. In the embodiment, the performance proxy component 15 may communicate with the performance service component 111. However, since the performance service component 111 is deployed in the virtual machine 11, and the performance proxy component 15 is deployed in other resources of the physical machine 10 apart from the virtual machine 11, the direct communication between the performance service component 111 and the performance proxy component 15 requires virtualization processing on a communication channel, which increases the virtualization complexity of the physical machine 10, and occupies a lot of resources of the physical machine 10. Furthermore, if the performance service component 111 directly communicates with the performance proxy component 15, firstly, since the raw data acquired by the performance proxy component 15 includes data such as binary data which cannot be directly understood by the user, the user cannot directly acquire the hardware performance parameter of the physical machine 10 by directly acquiring the raw data; secondly, since the raw data acquired by the performance proxy component 15 may also include some sensitive data, the information security is relatively low, if the raw data acquired by the performance proxy component 15 is directly provided to the performance service component 111.

In this embodiment, in order to solve above problems, the performance proxy component 15 may be set to communicate with the performance server 20. In an implementation, the performance proxy component 15 may communicate with the performance server 20 via a virtual network, to which the communication manner is not limited.

In some embodiments, as shown in FIG. 1, for a physical machine 10 provided with an accelerator card 14, the performance proxy component 15 may be deployed in inherent resources of the physical machine 10, or in the accelerator card 14. The inherent resources refer to resources other than the accelerator card 14. In an implementation, the performance proxy component 15 may be deployed in the accelerator card 14 in order to achieve hardware acceleration, improve data processing efficiency, and reduce occupation of the inherent resources of the physical machine 10 (resources other than the accelerator card 14). In other embodiments, as shown in FIG. 2, for the physical machine 10 without an accelerator card 14, the performance proxy component 15 may be deployed in the inherent resources of the physical machine 10.

In this embodiment, the performance proxy component 15 may interact with the performance server 20. As such, in embodiments of the present application, the performance proxy component 15 and performance server 20 may be utilized to acquire hardware performance information of the physical machine 10. For example, a client S20 corresponding to the virtual machine 11 may send a hardware performance data request to the virtual machine 11. The hardware performance data request may include a hardware performance parameter to be acquired. In the embodiment of the present application, the hardware performance mainly refers to the hardware performance of a host machine of the virtual machine 11, namely, the hardware performance of the physical machine 10, and may include: one or more of hardware performance of a processing unit, network performance, and storage performance of the physical machine 10. The hardware performance of the processing unit may include: cache miss information, branch prediction errors, etc. The network performance refers to attribute information that may reflect network performance, such as throughput information, connection information, delay information and rate information. The storage performance refers to attribute information that may reflect a storage capability, such as the number of I/O, read/write bandwidth, etc.

In this embodiment, the virtual machine 11 may acquire a hardware performance data request through the performance service component 111 described above. In an implementation, the virtual machine 11 may provide the hardware performance data request to the performance server 20 via the performance service component 111. Accordingly, the performance server 20 may receive the hardware performance data request, and provide the hardware performance data request to the performance proxy component 15.

In an embodiment, the performance proxy component 15 may acquire associated data reflecting the hardware performance of the physical machine according to the hardware performance data request and provide the associated data to the performance server 20.

If the hardware performance parameters requested by the hardware performance data request are different, the implementations for acquiring the associated data reflecting the hardware performance of the physical machine 10 are different. Accordingly, the performance proxy component 15 may determine the hardware performance parameter to be acquired according to the hardware performance data request, and acquire, in an acquisition manner corresponding to the hardware performance parameter to be acquired, associated data of the hardware performance parameters to be acquired as the above-mentioned associated data reflecting the hardware performance of the physical machine.

In some embodiments, the hardware performance parameter to be acquired is the network performance and/or storage performance of a physical machine. Accordingly, the performance proxy component 15 may acquire network performance data and/or storage performance data of the physical machine 10 from Quality of Service (QoS) data of the physical machine 10 as the above-mentioned associated data reflecting the hardware performance of the physical machine 10.

In this embodiment, for an embodiment where the network performance and/or storage performance of the physical machine reaches an upper limit, the performance proxy component 15 may also acquire, from the service quality data of the physical machine 10, relevant information for reflecting that the network performance and/or storage performance reaches the upper limit, and take the relevant information reflecting that the network performance and/or the storage performance reaches the upper limit, as corresponding performance data.

In other embodiments, for a physical machine provided with the accelerator card 14, the hardware performance parameter to be acquired may be hardware performance data of the accelerator card 14. Accordingly, the performance proxy component 15 may acquire the hardware performance data of the physical machine 10 as the aforementioned associated data reflecting the hardware performance of the physical machine 10. For example, the performance proxy component 15 can acquire from the Quality of Service (QoS) data of the accelerator card 14, network performance data and/or storage performance data for the accelerator card 14 as hardware performance data of the physical machine 10 described above, etc.

In this embodiment, for an embodiment where the network performance and/or storage performance of the accelerator card 14 reaches an upper limit, the performance proxy component 15 may also acquire, from the service quality data of the accelerator card 14, relevant information for reflecting that the network performance and/or storage performance reaches the upper limit, and take the relevant information reflecting that the network performance and/or storage performance reaches the upper limit, as performance data of the corresponding performance of the accelerator card 14.

In still other embodiments, the hardware performance parameter to be acquired is a performance parameter of the processing unit 12. Accordingly, a performance collection component 16 may be additionally provided in the physical machine 10. The performance collection component 16 may be implemented as a data collection daemon, such as a PMC Collection Daemon. In this embodiment, the performance proxy component 15 may instruct the performance collection component 16 to collect performance monitoring data of a performance monitoring counter corresponding to the hardware performance parameter to be acquired in a case where the hardware performance parameter to be acquired includes the performance parameter of the processing unit 12. Accordingly, the performance collection component 16 may provide the collected performance monitoring data to the performance proxy component 15. Accordingly, the performance proxy component 15 may determine the performance monitoring data as associated data of the hardware performance of the physical machine.

After acquiring the associated data that may reflect the hardware performance of the physical machine 10, the performance proxy component 15 may provide the associated data reflecting the hardware performance of the physical machine 10 to the performance server 20. Accordingly, the performance server 20 may receive the associated data reflecting the hardware performance of the physical machine 10, and process the associated data in a preset data processing manner to determine the hardware performance parameter of the physical machine 10.

In embodiments of the present application, no limitation is made to the specific manner in which the performance server 20 processes the associated data reflecting the hardware performance of the physical machine 10. In some embodiments, the performance server 20 may perform a desensitization process on the associated data reflecting the hardware performance of physical machine 10. In other embodiments, the performance server 20 may process the associated data based on the data processing manner corresponding to the hardware the performance parameter. For example, assuming that the hardware performance data is a cache hit rate, the associated data reflecting the hardware performance of the physical machine 10 may be performance monitoring data of a PMC counting cache miss events and performance monitoring data of a PMC2 counting access events. Accordingly, the performance server 20 may calculate, for example, the cache hit rate based on the number of misses of the cache miss events and the number of accesses.

In some implementations, the performance server 20 may provide the hardware performance parameter to the client S20 of the virtual machine 11. In the embodiment of the present application, no limitation is made to the specific implementation mode in which the performance server 20 provides the hardware performance parameter of the physical machine to the client S20. In some embodiments, as shown in FIG. 1, the performance server 20 may provide the hardware performance parameter of the physical machine 10 to the performance service component 111 in the virtual machine 11, the virtual machine 11 may provide the hardware performance parameter of the physical machine 10 to the client S20 through the performance service component 111.

In other embodiments, the performance server 20 may provide the hardware performance parameter to a console (not shown in FIG. 1 and FIG. 2) corresponding to the virtual machine 11, such as a console of an ECS. The console may provide a Web front-end interface that may display the hardware performance parameter of the physical machine 10. The client S20 may send to the console a corresponding request to acquire the hardware performance data. The console may provide the hardware performance data to the client S20 in response to the request from the client S20. For example, the console may generate a data dashboard corresponding to the hardware performance parameter. The client S20 may access the console to acquire the data dashboard corresponding to the hardware performance parameter of the physical machine 10, thereby obtaining the hardware performance parameter of the physical machine 10.

For the client S20, the hardware performance parameter of the physical machine 10 may be acquired, and, for example, performance tuning may be performed on an application deployed in the virtual machine 11 according to the hardware performance parameter of the physical machine 10. However, the present application is not limited thereto in this regard.

In this embodiment, the virtual machine is additionally provided with the performance service component which may serve as an interaction interface, and the performance proxy component is additionally provided in the physical machine where the virtual machine is located. The virtual machine may acquire the hardware performance data request via the performance service component, and provide the hardware performance data request to the performance proxy component via the performance server. The performance proxy component may acquire associated data reflecting the hardware performance of the physical machine according to the hardware performance data request. The performance server may process the associated data reflecting the hardware performance of the physical machine in a preset data processing manner to obtain a corresponding hardware performance parameter. In an implementation, the performance server may provide the hardware performance parameter of the physical machine to a client corresponding to the virtual machine, thereby achieving the reveal of the underlying performance of the hardware of the physical machine. Embodiments of the present application achieve, based on the form of service, the reveal of the underlying performance of the hardware of the physical machine to a user of the virtual machine, which may provide a reference for subsequent performance tuning for the user.

On the other hand, with the underlying performance of the hardware of the physical machine being revealed to a user in the form of service, the acquired associated data of the hardware performance may be processed and provided to the user in a limited manner, so as to ensure the data security of the sensitive data.

In addition, with the underlying performance of the hardware of the physical machine being revealed to a user in the form of service, the associated data of the original hardware performance may be processed to obtain the hardware performance parameters that may be understood by the user, which helps to improve the quality of service.

In addition to the above-mentioned system embodiments, embodiments of the present application also provide a hardware performance acquisition method. The hardware performance acquisition method provided by embodiments of the present application will be exemplarily illustrated below from perspective of a performance server and a physical machine, respectively.

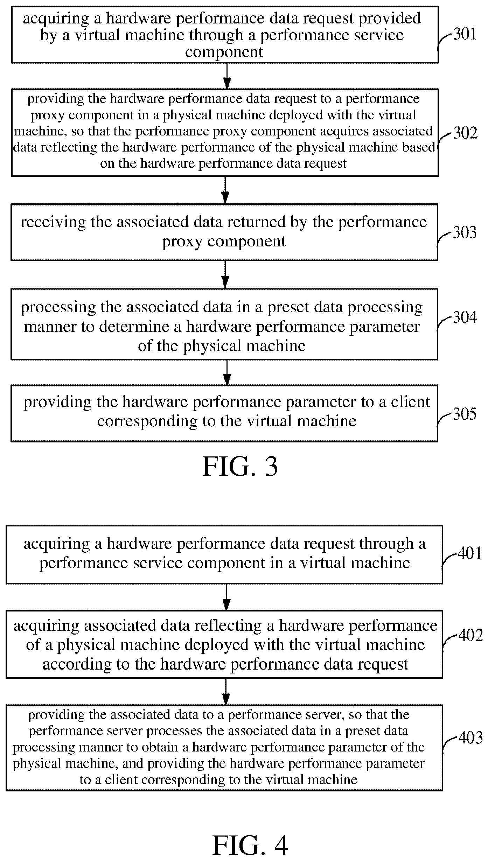

FIG. 3 is a flow chart of a hardware performance acquisition method provided by an embodiment of the present application. As shown in FIG. 3, the hardware performance acquisition method 300 includes the following step S301 to step S305:
S301: acquiring a hardware performance data request provided by a virtual machine through a performance service component.
S302: providing the hardware performance data request to a performance proxy component in a physical machine deployed with the virtual machine, so that the performance proxy component acquires associated data reflecting the hardware performance of the physical machine based on the hardware performance data request.
S303: receiving the associated data returned by the performance proxy component.
S304: processing the associated data in a preset data processing manner to determine a hardware performance parameter of the physical machine.
S305: providing the hardware performance parameter to a client corresponding to the virtual machine.

FIG. 4 is a flow chart of a hardware performance acquisition method provided by an embodiment of the present application. The hardware performance acquisition method 400 includes the following step S401 to step S403:
S401: acquiring a hardware performance data request through a performance service component in a virtual machine.
S402: acquiring associated data reflecting a hardware performance of a physical machine deployed with the virtual machine according to the hardware performance data request.
S403: providing the associated data to a performance server, so that the performance server processes the associated data in a preset data processing manner to obtain a hardware performance parameter of the physical machine, and providing the hardware performance parameter to a client corresponding to the virtual machine.

In embodiments of the present application, a performance service component may be additionally provided in the virtual machine in order to provide the underlying hardware performance information of the physical machine to a user of the virtual machine. The performance service component may provide an interaction interface which may receive a request sent by a client corresponding to the virtual machine, and interact with the client based on the request from the client.

In order to acquire hardware performance information of the physical machine, a performance proxy component may also be additionally provided in the physical machine. In this embodiment, the physical machine is a host of the virtual machine. In some embodiments, for a physical machine provided with an accelerator card, the performance proxy component may be deployed in an inherent resource of the physical machine, and the performance proxy component may also be deployed in the accelerator card. In an implementation, the performance proxy component may be deployed in the accelerator card in order to achieve hardware acceleration, improve the data processing efficiency, and reduce the occupation of inherent resources of the physical machine (resources other than the accelerator card). In some other embodiments, for a physical machine without the accelerator card, the performance proxy component may be deployed in the inherent resource of the physical machine.

In this embodiment, the performance proxy component may interact with the performance server. Thus, in an embodiment of the present application, the performance proxy component and the performance server may be utilized to acquire the hardware performance information for the physical machine. For example, the client corresponding to the virtual machine may send the hardware performance data request to the virtual machine. The hardware performance data request may include a hardware performance parameter to be acquired.

In an embodiment, the virtual machine may provide the hardware performance data request to the performance server through the performance service component. Accordingly, for the performance server, in step S301, the hardware performance data request provided by the virtual machine through the performance service component may be acquired. Further, in step S302, the hardware performance data request is provided to the performance proxy component in the host physical machine where the virtual machine is deployed.

Accordingly, in step S401, the hardware performance data request may be acquired by the performance service component in the virtual machine. The hardware performance data request acquired in step S401 may be sent to the performance proxy component by the performance service component in the virtual machine through the performance server. Furthermore, in step S402, the associated data reflecting the hardware performance of the physical machine is acquired according to the hardware performance data request, and in step S403, the associated data is provided to the performance server.

If the hardware performance parameters requested by the hardware performance data request are different, the implementation modes of acquiring the associated data reflecting the hardware performance of the physical machine are different. Accordingly, step S402 may be implemented as: determining a hardware performance parameter to be acquired according to the hardware performance data request; and acquiring, in an acquisition manner corresponding to the hardware performance parameter to be acquired, associated data of the hardware performance parameter to be acquired, as the associated data reflecting the hardware performance of the physical machine.

In some embodiments, the hardware performance parameter to be acquired is network performance and/or storage performance of the physical machine. One implementation of step S402 is: in a case where the hardware performance parameter to be acquired is the network performance and/or storage performance of the physical machine, acquiring, from Quality of Service (QoS) data of the physical machine, network performance data and/or storage performance data of the physical machine, as the associated data reflecting the hardware performance of the physical machine.

In this embodiment, for an embodiment where the network performance and/or storage performance of the physical machine reaches an upper limit, it is also possible to acquire, from the service quality data of the physical machine, relevant information for reflecting that the network performance and/or storage performance reaches the upper limit, and take the relevant information reflecting that the network performance and/or the storage performance reaches the upper limit, as corresponding performance data.

In other embodiments, for a physical machine provided with an accelerator card, the hardware performance parameter to be acquired may be hardware performance data of the accelerator card. Accordingly, another implementation of step S402 is: in a case where the hardware performance parameter to be acquired is hardware performance data of the accelerator card, acquiring the hardware performance data of the accelerator card as the associated data reflecting the hardware performance of the physical machine. For example, the network performance data and/or storage performance data of the accelerator card may be acquired from the Quality of Service (QoS) data of the accelerator card, as hardware performance data of the physical machine 10 described above, etc.

In this embodiment, for an embodiment where the network performance and/or storage performance of the accelerator card reaches an upper limit, it is further possible to acquire, from the service quality data of the accelerator card 14, relevant information for reflecting that the network performance and/or storage performance reaches the upper limit, and take the relevant information reflecting that the network performance and/or storage performance reaches the upper limit, as performance data of the corresponding performance of the accelerator card.

In still some other embodiments, the hardware performance parameter to be acquired is a performance parameter of the processing unit. Accordingly, a performance collection component may be additionally provided in the physical machine. The performance collection component may be implemented as a data collection daemon, such as a PMC Collection Daemon. In this embodiment, a further implementation of step S402 is instructing the performance collection component to collect performance monitoring data of a performance monitoring counter corresponding to the hardware performance parameter to be acquired in a case where the hardware performance parameter to be acquired includes the performance parameter of the processing unit, and provide the collected performance monitoring data to the performance proxy component as associated data of the hardware performance of the physical machine.

After acquiring the associated data that may reflect the hardware performance of the physical machine, in step S403, the associated data reflecting the hardware performance of the physical machine may be provided to the performance server. Accordingly, in step S303, the performance server may receive the associated data reflecting the hardware performance of the physical machine, and in step S304, process the associated data in a preset data processing manner to determine the hardware performance parameter of the physical machine.

In step S305, the hardware performance parameter is provided to the client of the virtual machine. In embodiments of the present application, no limitation is made to the specific implementation mode in which the performance server provides the hardware performance parameter of the physical machine to the client. In some embodiments, performance server may provide the hardware performance parameter of the physical machine to the performance service component in the virtual machine, and the virtual machine may provide the hardware performance parameter of the physical machine to the client through the performance service component.

In other embodiments, the performance server may provide the hardware performance parameter to a console corresponding to the virtual machine so that the console provides hardware performance data to the client in response to a request from the client. For example, the client S20 may access the console to acquire a data dashboard corresponding to the hardware performance parameter of the physical machine to acquire the hardware performance parameter of the physical machine.

For the client, the hardware performance parameter of the physical machine may be acquired, and performance tuning is performed on an application deployed in the virtual machine according to the hardware performance parameter of the physical machine. The present application is not limited thereto in this regard.

In this embodiment, the virtual machine is additionally provided with the performance service component which may serve as an interaction interface, and the performance proxy component is additionally provided in the physical machine where the virtual machine is located. The virtual machine may acquire the hardware performance data request via the performance service component, and provide the hardware performance data request to the performance proxy component via the performance server. The performance proxy component may acquire associated data reflecting the hardware performance of the physical machine according to the hardware performance data request. The performance server may process the associated data reflecting the hardware performance of the physical machine in a preset data processing manner to obtain the corresponding hardware performance parameter. The performance server may provide the hardware performance parameter of the physical machine to the client corresponding to the virtual machine, thereby achieving the reveal of the underlying performance of the hardware of the physical machine. The embodiment of the present application achieves, in the form of service, the reveal of the underlying performance of the hardware of the physical machine to a user of the virtual machine, which may provide a reference for subsequent performance tuning for the user.

On the other hand, with the underlying performance of the hardware of the physical machine being revealed to a user in the form of service, the acquired associated data of the hardware performance may be processed and provided to the user in a limited manner, so as to ensure the data security of the sensitive data.

In addition, with the underlying performance of the hardware of the physical machine being revealed to a user in the form of service, the associated data of the original hardware performance may be processed to obtain the hardware performance parameters that may be understood by the user, which helps to improve the quality of service.

It should be appreciated that the subjects for performing the steps of the method provided by the above-mentioned embodiments may all be the same device, or the method may also be performed by different devices. For example, the subject performing steps S401 and S402 may be device A. For another example, the subject performing step S401 may be a device A, and the subject performing step S402 may be a device B; and so on.

In addition, in some processes described in the above embodiments and in the drawings, a plurality of operations occurring in a particular order are included, but it should be clearly appreciated that the operations may be performed not in the occurring order in the text or may be performed in parallel, and that the serial numbers of the operations such as S401 and S402 are merely used to distinguish different operations, and the serial numbers themselves do not represent any order of execution. In addition, the processes may include more or fewer operations, and these operations may be performed sequentially or in parallel.

The present application has the following advantages: according to embodiments of the present application, a virtual machine is additionally provided with a performance service component which may serve as an interaction interface, and a performance proxy component is additionally provided in the physical machine where the virtual machine is located. The virtual machine may acquire a hardware performance data request via a performance service component, and provide the hardware performance data request to the performance proxy component via a performance server. The performance proxy component may acquire associated data reflecting the hardware performance of the physical machine according to the hardware performance data request. The performance server may process the associated data reflecting the hardware performance of the physical machine in a preset data processing manner to obtain a corresponding hardware performance parameter. Furthermore, the performance server may provide the hardware performance parameter of the physical machine to a client corresponding to the virtual machine, thereby achieving the reveal of the underlying performance of the hardware of the physical machine. Embodiments of the present application achieves, in the form of service, the reveal of the underlying performance of the hardware of the physical machine to a user of the virtual machine, which may provide a reference for subsequent performance tuning for the user.

Accordingly, embodiments of the present application further provide a computer-readable storage medium storing computer instructions which, when executed by one or more processors, cause the one or more processors to perform the steps of respective hardware performance acquisition method mentioned above.

Embodiments of the present application further provide a computer program product including: a computer program; the computer program, when executed by a processor, causes the processor to perform the steps of the above-mentioned hardware performance acquisition method executed by the performance server. In embodiments of the present application, no limitation is made to specific implementation forms of the computer program product. In some embodiments, the computer program product may be implemented as a software functional module such as a plug-in. In other embodiments, the computer program product may be deployed in cloud, and implemented as a SaaS model, etc.

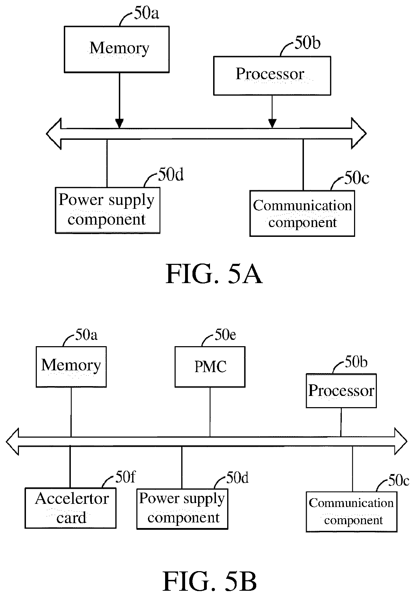

FIG. 5A and FIG. 5B are schematic diagrams of a computing device according to an embodiment of the present application. As shown in FIG. 5, the computing device includes: a memory 50a, a processor 50b and a communication component 50c. In this embodiment, the memory 50a is used to store a computer program.

Certainly, in embodiments of the present application, the memory 50a may store data in addition to the computer program. For example, the memory 50a may store the associated data of the hardware performance of the physical machine.

The processor 50b is coupled to the memory 50a and the communication component 50c and configured to execute a computer program to: acquire, by the communication component 50c, a hardware performance data request provided by a virtual machine through a performance service component; and provide, by the communication component 50c, the hardware performance data request to a performance proxy component in a physical machine deployed with the virtual machine, so that the performance proxy component acquires associated data reflecting the hardware performance of the physical machine based on the hardware performance data request; and receive, by the communication component 50c, the associated data returned by the performance proxy component; process, in a preset data processing manner, the associated data to determine the hardware performance parameter of the physical machine; and provide, by the communication component 50c, the hardware performance parameter to a client corresponding to the virtual machine.

In an embodiment, upon providing the hardware performance parameter to the client corresponding to the virtual machine, the processor 50b is used to: provide, by the communication component 50c, the hardware performance parameters to the performance service component so that the virtual machine acquires the hardware performance parameter via the performance service component; and/or provide, by the communication component 50c, the hardware performance parameter to a control device of the virtual machine so that the control device provides the hardware performance parameter to the client in response to a request from the client.

The computing device provided in this embodiment may interact with the performance service component in the virtual machine and the performance proxy component in the physical machine where the virtual machine is located, and may acquire the hardware performance data request provided by the virtual machine via the performance service component, and provide the hardware performance data request to the performance proxy component in the physical machine, so that the performance proxy component acquires the hardware performance data of the corresponding physical machine according to the hardware performance data request and return the same; and then, process the hardware performance data in a preset data processing manner to obtain a corresponding hardware performance parameter. Furthermore, the hardware performance parameter of the physical machine may be provided to a client corresponding to the virtual machine, so as to achieve the reveal of the underlying performance of the hardware of the physical machine. The embodiment of the present application achieves, in the form of service, the reveal of the underlying performance of the hardware of the physical machine to a user of the virtual machine, which may provide a reference for subsequent performance tuning for the user.

In other embodiments, the processor 50b is coupled to the memory 50a and the communication component 50c and configured to execute a computer program to: acquire a hardware performance data request through a performance service component in a virtual machine; acquire associated data reflecting a hardware performance of a physical machine deployed with the virtual machine according to the hardware performance data request; provide, by the communication component 50c, the associated data to a performance server so that the performance server processes the associated data in a preset data processing manner to obtain a hardware performance parameter of the physical machine, and provide the hardware performance parameter to a client corresponding to the virtual machine.

In some embodiments, the computing device includes: a performance monitoring counter (PMC) 50e for performing performance monitoring on the processor 50b. Accordingly, upon acquiring the hardware performance data of the physical machine, the processor 50b is specifically used to: determine a hardware performance parameter to be acquired according to the hardware performance data request; in a case where the hardware performance parameter is a hardware performance parameter of a processing unit of the physical machine, collect performance monitoring data of the performance monitoring counter 50e corresponding to the hardware performance parameter to be acquired, as associated data.

In some embodiments, the computing device further includes an accelerator card 50f. Accordingly, upon acquiring the hardware performance data of the physical machine, the processor 50b is specifically used to: determine a hardware performance parameter to be acquired according to the hardware performance data request; in a case where the hardware performance parameter is a hardware performance parameter of the acceleration card 50f of the physical machine, acquire the hardware performance data of the accelerator card as associated data.

In some embodiments, upon acquiring the hardware performance data of the accelerator card, the processor 50b is specifically used to: acquire, from quality of service data of the accelerator card, network data and/or storage data of the accelerator card 50e, as hardware performance data of the accelerator card.

In some embodiments, as shown in FIG. 5A and FIG. 5B, the computing device may further include a power supply module 50d, etc. FIG. 5A and FIG. 5B merely schematically show part of the components, and it is not meant that the computing device must contain all of the components shown in FIG. 5A and FIG. 5B, nor is it meant that the computing device only includes the components shown in FIG. 5A and FIG. 5b.

The computing device provided in the present embodiment may be a host machine of a virtual machine. The computing device may acquire a hardware performance data request through a performance service component in a virtual machine; acquire associated data reflecting a hardware performance of a physical machine according to the hardware performance data request; provide the associated data to a performance server so that the performance server may process the hardware performance data in a preset data processing manner to obtain a corresponding hardware performance parameter. Further, the performance server may provide the hardware performance parameter of the physical machine to the client corresponding to the virtual machine, so as to achieve the reveal of the underlying performance of the hardware of the physical machine. Embodiments of the present application realize, in the form of service, a reveal of the underlying performance of hardware of the physical machine to a user of the virtual machine, which may provide a reference for subsequent performance tuning for the user.

In embodiments of the present application, the memory is used to store a computer program and may be configured to store various other data to support operations on the device on which it resides. The processor may execute a computer program stored in the memory to implement a corresponding control logic. The memory may be implemented by any type of volatile or non-volatile storage device or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic disk or optical disk.

In embodiments of the present application, a processor may be any hardware processing device that may execute the logic of the methods described above. In an implementation, the processor may be a Central Processing Unit (CPU), a Graphics Processing Unit (GPU) or a Microcontroller Unit (MCU); it may also be a programmable device such as a Field-Programmable Gate Array (FPGA), a Programmable Array Logic (PAL), a General Array Logic (GAL), and a Complex Programmable Logic Device (CPLD); it may also be an Advanced RISC Machine (ARM) processor or a System on Chip (SOC), etc. The present is not limited thereto in this regard.

In embodiments of the present application, the communication component is configured to facilitate wired or wireless communication between a device in which the communication component is located and other devices. The device in which the communication component is located may access a wireless network based on a communication standard, such as WiFi, 2G, 3G, 4G, 5G or a combination thereof. In an exemplary embodiment, the communication component receives a broadcast signal or broadcast-related information from an external broadcast management system via a broadcast channel. In an exemplary embodiment, the communication component may also be implemented based on Near Field Communication (NFC) technology, Radio Frequency Identification (RFID) technology, Infrared Data Association (IrDA) technology, Ultra-Wide Band (UWB) technology, Bluetooth (BT) technology, or other technologies.

In embodiments of the present application, the power supply component is configured to provide power to various components of the device in which it is located. The power supply component may include a power supply management system, one or more power supplies, and other components associated with generating, managing, and distributing power for the device in which the power supply component is located.

It should be appreciated that the terms "first" and "second" herein are intended to distinguish different messages, devices, modules, etc., and not to represent a sequential order, nor do they define that "first" and "second" are of different types.

It will be appreciated by one skilled in the art that embodiments of the present application may be provided as a method, system, or computer program product. Accordingly, the present application may take the form of an entirely hardware embodiment, an entirely software embodiment or an embodiment combining software and hardware aspects. Furthermore, the present application may take the form of a computer program product embodied on one or more computer-usable storage media (including, but not limited to, magnetic disk storage, CD-ROM, optical storage, etc.) having computer-usable program code contained therein.

The present application is described with reference to flowcharts and/or block diagrams of the methods, apparatus (system), and computer program product according to embodiments of the present application. It will be understood that the computer program instructions implement each flow and/or block of the flowchart and/or block diagram, and combinations of flows and/or blocks in the flowchart and/or block diagram. These computer program instructions may be provided to a processor of a general-purpose computer, a special-purpose computer, an embedded processor or a processor of other programmable data processing apparatus to produce a machine, such that the instructions, which are executed via the processor of the computer or other programmable data processing apparatus, create means for implementing the functions specified in one or more flows of the flowchart and/or one or more blocks of the block diagram.

These computer program instructions may also be stored in a computer-readable memory that can guide a computer or other programmable data processing apparatus to operate in a particular manner, such that the instructions stored in the computer-readable memory produce an article of manufacture including instruction means which implement the functions specified in one or more flows of the flowchart and/or one or more blocks of the block diagram.

These computer program instructions may also be loaded onto a computer or other programmable data processing apparatus to cause a series of operation steps to be performed on the computer or other programmable apparatus to produce a computer implemented process such that the instructions executed on the computer or other programmable apparatus provide steps for implementing the functions specified in one or more flows of the flowchart and/or one or more blocks of the block diagram.

In a typical configuration, the computing device includes one or more processors (CPUs), an input/output interface, a network interface, and a memory.

The memory may include forms of non-persistent memory, random access memory (RAM), and/or non-volatile memory such as Read Only Memory (ROM) or flash RAM in a computer readable medium. The memory is an example of a computer-readable medium.

The storage medium of the computer is a readable storage medium, also referred to as a readable medium. The readable storage medium includes permanent and non-permanent, removable and non-removable media and may implement information storage by any method or technique. The information may be computer readable instructions, data structures, modules of a program, or other data. Examples of the storage medium of the computer include, but are not limited to, Phase-Change RAM (PRAM), Static Random Access Memory (SRAM), Dynamic Random Access Memory (DRAM), other types of Random Access Memory (RAM), Read Only Memory (ROM), Electrically Erasable Programmable Read Only Memory (EEPROM), flash memory or other memory technology, Compact Disc Read Only Memory (CD-ROM), DIGITAL VERSATILE Disc (DVD) or other optical storage, magnetic cassettes, disk storage or other magnetic storage devices, or any other non-transmission medium, which may be used to store information that may be accessed by a computing device. As defined herein, the computer-readable medium does not include transitory media, such as modulated data signals and carriers.

It should also be noted that the terms "comprise", "include" or any other variation thereof, are intended to cover a non-exclusive inclusion, such that a process, method, article, or apparatus that includes a list of elements not only includes those elements but also includes other elements not expressly listed or elements inherent to such process, method, article, or apparatus. An element defined by "comprising ..." does not, without more constraints, preclude the existence of additional identical elements in the process, method, article, or apparatus that includes the element.

What are described above are embodiments of the present application, and are not intended to limit the present application. Those skilled in the art appreciate that various modifications and variations can be made to the present application. Any modifications, equivalent substitutions, improvements and the like made within the spirit and principles of the present application should all be included in the scope defined by the claims of the present application.

## Claims

1. A computing system, comprising: a physical machine deployed with a virtual machine and a performance proxy component, and a performance server, the virtual machine being deployed with a performance service component;
wherein the virtual machine acquires a hardware performance data request through the performance service component, and provides the hardware performance data request to the performance proxy component via the performance server;
the performance proxy component is configured to acquire associated data reflecting a hardware performance of the physical machine according to the hardware performance data request, and provide the associated data to the performance server;
the performance server is configured to process the associated data in a preset data processing manner to determine a hardware performance parameter of the physical machine, and provide the hardware performance parameter to a client corresponding to the virtual machine.

2. The system of claim 1, wherein the physical machine comprises: a processing unit and a performance monitoring counter for performing performance monitoring on the processing unit;
the physical machine is further deployed with a performance collection component;
the performance proxy component, upon acquiring the associated data reflecting the hardware performance of the physical machine, is configured to: determine a hardware performance parameter to be acquired according to the hardware performance data request; instruct, in a case where the hardware performance parameter to be acquired comprises a performance parameter of the processing unit, the performance collection component to collect performance monitoring data of the performance monitoring counter corresponding to the hardware performance parameter to be acquired;
the performance collection component provides the collected performance monitoring data to the performance proxy component;
the performance proxy component determines the performance monitoring data as the associated data reflecting the hardware performance of the physical machine.

3. The system of claim 1, wherein the physical machine comprises an accelerator card communicatively connected to the processing unit of the physical machine;
the performance proxy component, upon acquiring the associated data reflecting the hardware performance of the physical machine, is configured to: determine a hardware performance parameter to be acquired according to the hardware performance data request; acquire, in a case where the hardware performance parameter to be acquired comprises a performance parameter of the accelerator card, hardware performance data of the accelerator card as the associated data reflecting the hardware performance of the physical machine.

4. The system of claim 3, wherein the performance proxy component is deployed in the accelerator card.

5. A hardware performance acquisition method, comprising:
acquiring a hardware performance data request provided by a virtual machine through a performance service component;
providing the hardware performance data request to a performance proxy component in a physical machine deployed with the virtual machine, so that the performance proxy component acquires associated data reflecting a hardware performance of the physical machine based on the hardware performance data request;
receiving the associated data returned by the performance proxy component;
processing the associated data in a preset data processing manner to determine a hardware performance parameter of the physical machine;
providing the hardware performance parameter to a client corresponding to the virtual machine.

6. The method of claim 5, wherein providing the hardware performance parameter to the client corresponding to the virtual machine comprises:
providing the hardware performance parameter to the performance service component, so that the virtual machine acquires the hardware performance parameter through the performance service component;
and/or
providing the hardware performance parameter to a console of the virtual machine, so that the console provides the hardware performance parameter to the client in response to a request from the client.

7. A hardware performance acquisition method, comprising:
acquiring a hardware performance data request through a performance service component in a virtual machine;
acquiring associated data reflecting a hardware performance of a physical machine deployed with the virtual machine according to the hardware performance data request;
providing the associated data to a performance server, so that the performance server processes the associated data in a preset data processing manner to obtain a hardware performance parameter of the physical machine, and providing the hardware performance parameter to a client corresponding to the virtual machine.

8. The method of claim 7, wherein acquiring hardware performance data of the physical machine according to the hardware performance data request comprises:
determining a hardware performance parameter to be acquired according to the hardware performance data request;
collecting, in a case where the hardware performance parameter is a hardware performance parameter of a processing unit of the physical machine, performance monitoring data of a performance monitoring counter corresponding to the hardware performance parameter to be acquired, as the associated data.

9. The method of claim 7, wherein acquiring hardware performance data of the physical machine according to the hardware performance data request comprises:
determining a hardware performance parameter to be acquired according to the hardware performance data request;
acquiring, in a case where the hardware performance parameter is a hardware performance parameter of an accelerator card of the physical machine, hardware performance data of the accelerator card as the associated data.

10. The method of claim 9, wherein acquiring the hardware performance data of the accelerator card comprises:
acquiring, from service quality data of the accelerator card, network data and/or storage data of the accelerator card, as the hardware performance data of the accelerator card.

11. A computing device, comprising: a memory, a processor, and a communication component, wherein the memory is used for storing a computer program;
the processor is coupled to the memory and the communication component for executing the computer program to perform the steps of the method of any one of claims 5-10.

12. A computer-readable storage medium storing computer instructions which, when executed by one or more processors, cause the one or more processors to perform the steps of the method of any one of claims 5-10.
